Europäisches Patentamt

European Patent Office

Office européen des brevets

(19)

(11) Veröffentlichungsnummer: **0 393 609 B1**

(12) **EUROPÄISCHE PATENTSCHRIFT**

(45) Veröffentlichungstag der Patentschrift: **22.06.94**

(21) Anmeldenummer: **90107308.0**

(22) Anmeldetag: **18.04.90**

Die Akte enthält technische Angaben, die nach
dem Eingang der Anmeldung eingereicht wurden
und die nicht in dieser Patentschrift enthalten sind.

(51) Int. Cl.⁵: **C09D 151/00**, B05D 7/24,
C08F 283/02, C08F 265/06,
//(C08F265/06,220:36),
(C08F283/02,220:36)

(54) Hydroxylgruppenhaltiges Bindemittel, Verfahren zu dessen Herstellung und seine Verwendung.

(30) Priorität: **20.04.89 DE 3913001**

(43) Veröffentlichungstag der Anmeldung:
**24.10.90 Patentblatt 90/43**

(45) Bekanntmachung des Hinweises auf die
Patenterteilung:
**22.06.94 Patentblatt 94/25**

(84) Benannte Vertragsstaaten:
**AT BE CH DE DK ES FR GB IT LI NL SE**

(56) Entgegenhaltungen:
**EP-A- 0 184 761**

(73) Patentinhaber: **Herberts Gesellschaft mit beschränkter Haftung
Christbusch 25
D-42285 Wuppertal(DE)**

(72) Erfinder: **Bederke, Klaus, Dr.
Oststrasse 36
D-4322 Sprockhövel(DE)**
Erfinder: **Kerber, Hermann
Daniel-Schürmann-Weg 37
D-5600 Wuppertal 21(DE)**
Erfinder: **Dahm, Ralf
Wenschebach 8
D-5632 Wermelskirchen 2(DE)**
Erfinder: **Herrmann, Friedrich
Friedrichsallee 27
D-5600 Wuppertal 1(DE)**
Erfinder: **Voss, Horst
Normannenstrasse 64
D-5600 Wuppertal 2(DE)**

(74) Vertreter: **Türk, Gille, Hrabal, Leifert
Brucknerstrasse 20
D-40593 Düsseldorf (DE)**

EP 0 393 609 B1

EP 0 393 609 B1

**Beschreibung**

Die Erfindung betrifft hydroxylgruppenhaltige Bindemittel in Form einer nicht-wäßrigen Dispersion, deren Herstellung sowie deren Verwendung für die Erzeugung von Mehrschichtüberzügen. Die Bindemittel sind sowohl zur Herstellung von Basislacken als auch zur Herstellung von Klarlacken geeignet.

Nicht-wäßrige Dispersionen werden in Lacken zur Steigerung des Verarbeitungsfestkörpers (in Basislakken sowie in Klarlacken) sowie zur Verbesserung der Verarbeitungssicherheit (in Basislacken und Klarlakken) und der Anlöseresistenz von Basislacken ohne negative Beeinflussung des Metallic-Effekts im Lackfilm verwendet.

Dispersionen sind Teilchen synthetischer Polymerer in einer inerten Flüssigkeit, in der das Polymere unlöslich ist. Bekannte Dispersionen werden mit Hilfe eines polymeren Stabilisators stabilisiert. Im allgemeinen besitzt der Stabilisator eine (Verankerungs)Komponente, die sich mit dem Teilchen des dispersen Polymers assoziiert.

Die Dispersion enthält eine solvatisierte Komponente, die eine sterisch stabilisierende Hülle um das Teilchen bildet. Außerdem ist der Stabilisator an die Teilchen des Polymers kovalent gebunden.

Die Dispersion besitzt weitere funktionelle Gruppen, die zusammen mit anderen filmbildenden Harzkomponenten (HO-funkt. Alkyd-, Polyester,Acrylharze) mit den üblichen Härterkomponenten (Melamin/Formaldehyd-Harz) thermisch zu Lackfilmen vernetzt werden können.

Die DE-OS 22 62 463 beschreibt solche Dispersionen. Zur Stabilisierung wird eine Stabilisatorlösung bestehend aus einer Precursor- und Prästabilisator-Komponente verwendet. Der Stabilisator ist zusätzlich kovalent an die disperse Phase gebunden. Die Herstellung der Dispersion erfolgt in aliphatischen Kohlenwasserstoffen. Der Festkörper der Dispersion beträgt ca. 45%. Sie wird mit üblichen filmbildenden HO-funktionellen Harzen und Vernetzer-Harzen in Basislacke und Klarlacke verwendet.

In der DE-OS 28 18 095 werden Dispersionen nach dem gleichen Prinzip wie in der DE-OS 22 62 463 beschrieben und mit Acrylharzen als filmbildende Komponente und Melamin/Formaledehyd-Harzen für Basislacke eingesetzt. Die Herstellung erfolgt in Benzin (aliphatischen Kohlenwasserstoffen). Die Dispersion hat einen Feststoffgehalt von 52%, der Anteil an unlöslichen Mikroteilchen 31%.

In der DE-OS 28 18 093 werden Dispersionen mit Polyestern als filmbildende Komponente in Basislacken beschrieben. Lösemittel sind aliphatische Kohlenwasserstoffe. Die Dispersionen haben einen Festkörper von ca. 46%, der Festkörper der dispersen Phase beträgt ca. 28%.

Gemäß der DE-PS 17 20 417 erfolgt die Stabilisierung der Dispersion mit Methylol-Melaminharz-Kondensationsprodukten, die mit dem Acryl-Copolymer anvernetzen. Die Herstellung der Dispersion erfolgt in verzweigten aliphatischen Kohlenwasserstoffen. Der Festkörper der Dispersion beträgt max. 53%. Der Festkörper der dispersen Phase ist nicht genannt.

In der DE-PS 22 60 610 wird als Stabilisatorlösung ein Acrylcopolymerisat in Aliphaten/Aromaten-Gemischen (Kristallöl) und n-Propanol beschrieben. Die Anvernetzung erfolgt mit Ethylenglykoldimethacrylat. Der Festkörper der Dispersion beträgt 55-60%, der Festkörper der dispersen Phase ist deutlich niedriger.

Allen beschriebenen Dispersionen ist gemeinsam, daß die Stabilität von einer ganzen Reihe von Bedingungen abhängt, die gleichzeitig eingehalten werden müssen: Verwendung einer speziellen Stabilisatorkomponente, die zum Teil in mehrstufigen Syntheseschritten hergestellt werden muß; Verwendung einer sehr begrenzten Lösemittelauswahl oder bei Gemischen enge Fraktionsschnitte, bevorzugt aliphatische Kohlenwasserstoffe; aufeinander abgestimmte Copolymerisation zur Dispersion bei gleichzeitiger Teilvernetzung Stabilisator/disperse Phase und Teilvernetzung im Kern.

Geringe Fehler und Abweichungen bei den Herstellungsparametern können zur Instabilität der Dispersion führen.

Beispiele hierfür sind unkontrollierte Polymerisatbildung bei der Herstellung im Reaktor im Bereich der Grenzflächen gasförmig/flüssig, Viskositätsanstieg der zum Verlust des High Solid Charakters führt oder Klumpenbildung die zu Festkörperverlusten führt oder Eindicken bzw. Gelieren das zur vollständigen Unbrauchbarkeit der Dispersion führen kann.

Ein weiteres Indiz für die Unbrauchbarkeit ist das unerwünschte irreversible oder günstigstenfalls reversible Absetzen der Dispersion nach längerer Lagerung.

Aufgabe der Erfindung ist die Bereitstellung einer nicht-wäßrigen Dispersion, die als hydroxylgruppenhaltiges Bindemittel geeignet ist, eine verbesserte Stabilität in einem breiten Spektrum lacküblicher Lösemittel aufweist und sicher und wirtschaftlich herstellbar ist.

Diese Aufgabe wird durch eine nicht-wäßrige hydroxylgruppenhaltige Dispersion gelöst, die als Bindemittel geeignet ist und neben organischen Lösemitteln enthält:

2

A) 15 - 85 Gew.-% filmbildende, in den organischen Lösemitteln gelöste hydroxyl- und carboxylgruppenhaltige Polyester oder hydroxyl- und carboxylgruppenhaltige (Meth)acryl-Copolymerisate oder deren Mischungen , wobei bis zur Hälfte der Polyester- bzw. (Meth)acryl-Copolymerisat-Moleküle jeweils mit einem Molekül Maleinsäure verestert sein kann, und

B) 15 - 85 Gew -% einer dispersen Phase, die aus unvernetzten (Meth)acryl-Copolymeren, mit einer Hydroxylzahl, gerechnet als mg KOH pro g Komponente B), von mindestens 300, erhältlich durch radikalische Poymerisation von

a) 80 - 100 Gew.-% Hydroxyalkyl(meth)acrylaten und

b) 0 - 20 Gew.-% anderer $\alpha,\beta$-monoungesättigter Monomerer, die weder mit A) noch a) durch Polyaddition reagieren,

in der filmbildenden, gelösten vorgelegten Komponente wobei die Summe der Komponenten A) und B) bzw. a) und b) jeweils 100 beträgt.

Bei der Herstellung der erfindungsgemäßen Dispersion wird eine Lösung von

A) 15 - 85 Gewichtsteilen filmbildender, hydroxyl- und/oder carboxylgruppenhaltiger Polyester oder hydroxyl- und/oder carboxylgruppenhaltiger (Meth)acryl-Copolymerisate oder deren Mischungen , wobei bis zur Hälfte der Polyester- bzw. (Meth)acryl-Copolymerisat-Moleküle jeweils mit einem Molekül Maleinsäure verestert sein kann,vorgelegt und in dieser Vorlage werden

B) 15 - 85 Gewichtsteile von radikalisch polymerisierbaren Monomeren polymerisiert.

Diese radikalisch polymerisierbaren Monomeren können als Gemisch von

a) 80 - 100 Gew.-%, bevorzugt 90 - 100 Gew.-% Hydroxyalkyl(meth)acrylaten und

b) 0 - 20 Gew.-%, bevorzugt 0 - 10 Gew.-% anderer ungesättigter Monomerer vorliegen.

Die Monomeren werden kontinuierlich in die vorgelegte Lösung des Filmbildners eingebracht und darin in Gegenwart von Radikalinitiatoren polymerisiert.

Durch die erfindungsgemäße Verfahrensweise ergibt sich der Vorteil einer sicheren und wirtschaftlichen Herstellung der Dispersion, ohne die Nachteile, die sich durch den Stand der Technik ergeben. Da erfindungsgemäß keine Stabilisatorkomponente bereitgestellt wird, die nur Stabilisatorfunktion hat, sondern der Stabilisator gleichzeitig die filmbildende Phase ist, werden zusätzliche Syntheseschritte für den Stabilisator eingespart. Auch treten keine Verträglichkeitsprobleme mit der Stabilisatorkomponente im Lack auf,d.h. keine Verlaufs- und Strukturprobleme mit der Lackoberfläche oder keine Phasentrennung. Die erhaltene Dispersion ist stabil gegen Wärme und Lösemittel; die durch Erwärmung angequollene oder angelöste Dispersion bildet sich nämlich nach der Abkühlung zurück. Es ergibt sich somit eine höhere Stabilität der Dispersion trotz Verzicht auf Vorvernetzung. Dispersionen des Stands der Technik waren auf aliphatische Lösemittel angewiesen, was erfindungsgemäß nicht der Fall ist.

Die erfindungsgemäßen Dispersionen können einen sehr hohen Festkörpergehalt bis zu etwa 65% aufweisen, wobei sie dennoch eine niedrige Viskosität von 50 bis 500 mPas haben. Die disperse (unlösliche) Phase weist einen hohen Festkörpergehalt von etwa 50% auf. Beim Einsatz der erfindungsgemäßen Dispersionen erhält man Lacke mit hoher Lagerstabilität selbst bei erhöhten Temperaturen (beispielsweise bei Klarlacken).

Die erfindungsgemäßen Dispersionen werden hergestellt durch Bildung einer dispersen Phase aus unvernetzten (Meth)acryl-Copolymeren (Komponente B) in einem gelösten filmbildenden hydroxyl- und carboxylgruppenhaltigen Polyester oder hydroxyl- und carboxylgruppenhaltigen (Meth)acryl-Copolymerisat als Vorlage.

Als Komponente A)geeignete Polyester sind beispielsweise Veresterungsprodukte aus aliphatischen und/oder cycloaliphatischen Polyolen und aliphatischen, cycloaliphatischen und/oder aromatischen Polycarbonsäuren, wie sie für lacktechnische Zwecke üblich sind.

Die Polyester, die für die Herstellung der nicht-wäßrigen, hydroxylgruppenhaltigen Dispersion verwendet werden, können beispielsweise eine Hydroxylzahl von etwa 20 bis 190, bevorzugt 50 bis 160, und beispielsweise eine Säurezahl von etwa 5 bis 40 aufweisen.

Das Zahlenmittel des Molekulargewichts (Mn) beträgt günstig etwa 1000 bis 8000, bevorzugt 2000 bis 6000.

Die hydroxyl- und carboxylgruppenhaltige (Meth)acryl-Copolymerisate, die als Komponente A) eingesetzt werden können, weisen zweckmäßig ein Zahlenmittel des Molekulargewichts (Mn) von etwa 2000 bis 8000 auf. Die Hydroxylzahl liegt zweckmäßig bei zum Beispiel 50 bis 160 und die Säurezahl liegt beispielsweise bei 5 bis 40. Es handelt sich um für Lackzwecke übliche Copolymerisate, die zum Beispiel erhältlich sind durch radikalische Copolymerisation von $\alpha,\beta$-olefinisch ungesättigten Monomeren mit Acrylsäure, Methacrylsäure und deren Derivaten, wie Ester mit aliphatischen Alkoholen mit $C_1$-$C_{18}$. Beispiele für die $\alpha,\beta$-ungesättigten Monomeren sind solche, wie sie nachstehend für die Komponente B) angegeben werden.

Bis zur Hälfte der Moleküle (also bis zu 50%, bezogen auf das Zahlenmittel des Molekulargewichts ) sowohl des Polyesters als auch des (Meth)acryl-Copolymerisats der Komponente A) können jeweils mit einem Molekül Maleinsäure verestert sein. Bevorzugt liegt eine Veresterung mit Maleinsäure vor, wenn sich das Zahlenmittel des Molekulargewichts (Mn) der Polyester- bzw. (Meth)acrylat-Matrix im unteren angegebenen Bereich bewegt, also bei den Polyestern z.B. im Bereich von 1000 bis 2500 und bei den (Meth)acrylaten im Bereich von 2000 bis 6000. Dabei sind bevorzugt bis zu 50% der Moleküle in der Form der Maleinsäureester. Bevorzugt liegen die Halbester der Maleinsäure vor, wie sie z.B. durch Umsetzung der hydroxylgruppenhaltigen Polyester- bzw. (Meth)acrylat-Matrix mit einer derartigen Menge an Maleinsäureanhydrid erhalten werden, daß maximal nur die Hälfte der Moleküle reagieren kann.

Hauptbestandteil der dispersen Phase (Komponente B) sind Hydroxyalkylester der Acrylsäure und Methacrylsäure. Als Hydroxyalkylester der Acrylsäure oder Methacrylsäure sind beispielsweise geeignet: $\beta$-Hydroxyethylacrylat, $\beta$-Hydroxyethylmethacrylat, $\beta$-Hydroxypropylacrylat, $\beta$-Hydroxypropylmethacrylat, Butandiol-1.4-monoacrylat, Butandiol-1.4-monomethylacrylat, Hexandiol-1.6-monoacrylat, Hexandiol-1.6-monomethacrylat.

Weitere Beispiele sind Umsetzungsprodukte aus Lactonen mit Hydroxyalkyl(meth)acrylaten wie TONE-M 100® und glycidylgruppenhaltige Verbindungen wie CARDURA E10® mit (Meth)acrylsäure.

Beispiele für verwendbare Monomere sind $\alpha,\beta$-olefinisch ungesättigte Verbindungen wie: Methylacrylat, Methylmethacrylat, Ethylacrylat, Ethylmethacrylat, Iso-Propylmethacrylat, tert.-Butylacrylat, n-Butylacrylat, n-Butylmethacrylat, Iso-Butylacrylat, Iso-Butylmethacrylat, Cyclohexylmethacrylat, Trimethylcyclohexylmethacrylat, 2-Ethylhexylacrylat, 2-Ethylhexylmethacrylat, Laurylacrylat, Laurylmethacrylat, Stearylacrylat, Stearylmethacrylat; Styrol, $\alpha$-Methylstyrol, o,m,p-Methylstyrol, p-tert.-Butylstyrol; Vinylacetat, Vinylpropionat; Acrylamid, Methacrylamid, Acrylnitril.

Die Herstellung der erfindungsgemäßen nicht-wäßrigen hydroxylgruppenhaltigen Dispersion erfolgt durch radikalische Polymerisation.

Die hydroxylgruppenhaltige und carboxylgruppenhaltige Bindemittelmatrix (Polyester und/oder (Meth)-acryl-Copolymerisat) wird in solvatisierter (gelöster) Form in das Reaktionsgefäß vorgelegt, auf Reaktionstemperatur geheizt und das Monomeren/Initiatorgemisch der dispersen Phasen wird kontinuierlich innerhalb von z.B. 2 bis 8 Stunden, vorzugsweise innerhalb von 2 bis 6 Stunden, zudosiert.

Im Falle der Halbesterbildung mit Maleinsäure wird vor der Zugabe des Monomeren/Initiator-Gemisches mit der entsprechenden Menge an Maleinsäureanhydrid versetzt und durch Erhitzen auf zum Beispiel 100-120°C verestert.

Die Polymerisation wird beispielsweise bei Temperaturen zwischen 60°C und 160°C, vorzugsweise bei 100°C bis 130°C durchgeführt.

Die Polymerisationsreaktion kann mit den üblichen Polymerisationsinitiatoren gestartet werden. Geeignete Initiatoren sind Per- und Azo-Verbindungen, die in einer Reaktion 1.Ordnung thermisch in Radikale zerfallen. Initiatorart und -menge werden so gewählt, daß bei der Polymerisationstemperatur während der Zulaufphase ein möglichst konstantes Radikalangebot vorliegt.

Bevorzugt eingesetzte Initiatoren für die radikalische Polymerisation sind Dialkylperoxide, wie Di-tert.-Butylperoxid, Di-cumylperoxid; Diacylperoxide, wie Di-benzoylperoxid, Di-laurylperoxid; Hydroperoxide, wie Cumolhydroperoxid, tert.-Butylhydroperoxid; Perester, wie tert.-Butyl-perbenzoat, tert.-Butyl-perpivalat, tert.-Butyl-per-3,5,5-trimethylhexanoat, tert.-Butyl-per-2-ethylhexanoat; Peroxydicarbonate, wie Di-2-ethylhexyl-peroxydicarbonat, Dicyclohexyl-peroxydicarbonat; Perketale, wie 1,1-Bis-(tert.-Butylperoxy)3,5,5-trimethylcyclohexan, 1,1-Bis(tert.-Butylperoxy)cyclohexan; Ketonperoxide, wie Cyclohexanonperoxid, Methylisobutylketonperoxid; und Azo-Verbindungen, wie 2,2'-Azo-bis(2,4-dimethylvaleronitril),2,2'-Azo-bis(2-methylbutyronitril), 1,1'-Azo-bis-cyclohexancarbonitril), Azo-bis-isobutyronitril.

Die Polymerisationsinitiatoren, insbesondere die Perester werden im allgemeinen in einer Menge von 0.1 bis 3 Gew.-%, bezogen auf die Monomeren-Einwaage, zugesetzt.

Die Herstellung der Komponente B) erfolgt in einer Lösung der Komponente A) in einem organischen Lösemittel. Zur Auflösung bzw. Solvatisierung der Bindemittelmatrix (Komponente A) können beispielsweise solche eingesetzt werden, wie sie später auch für die aus den erfindungsgemäßen Bindemitteldispersionen hergestellten Überzugsmittel eingesetzt werden. Es handelt sich um übliche organische Lösemittel, wie beispielsweise Glykolether, wie Ethylenglykoldimethylether; Glykoletherester, wie Ethylglykolacetat, Butylglykolacetat, 3-Methoxy-n-butylacetat, Butyldiglykolacetat, Ethoxypropylacetat, Methoxypropylacetat; Ester, wie Methylacetat, Ethylacetat, Butylacetat, Isobutylacetat, Amylacetat; Ketone, wie Methylethylketon, Methylisobutylketon, Diisobutylketon, Cyclohexanon, Isophoron; aromatische Kohlenwasserstoffe , wie Toluol,o-,m-,p-Xylol, Ethylbenzol, SOLVESSO 100® ( Gemisch aromatischer Kohlenwasserstoffe mit einem Siedebereich von 153-180°C); Alkohole, wie Methanol, Ethanol, n-Propanol, iso-Propanol, n-Butanol, iso-Butanol, sek.-Butanol, tert.-Butanol, Hexanol, 2-Ethylhexanon und aliphatische Kohlenwasserstoffe , wie Heptan,

4

White Spirit® (Testbenzin mit einem Siedebereich von 144-165°C können ebenfalls anteilig mit den oben genannten Lösemitteln eingesetzt werden.

Bei der Herstellung der Komponente B) in der vorgelegten Komponente A) können zur Regelung des Molekulargewichts Kettenübertragungsmittel mitverwendet werden. Geeignet sind übliche Kettenüberträger, wie beispielsweise Mercaptane, Thioglykolsäureester und Chlorkohlenwasserstoffe.

Die Polymerisationsbedingungen (Reaktionstemperatur, Dosierzeit der Monomerenmischung, Initiatorart und -menge, Lösungskonzentration, Lösemittel-Komposition) werden so gewählt, daß es zu einer störungsfreien Ausbildung der Polymermikroteilchen kommt.

Die Teilchengröße der dispersen Phase, gemessen durch Photonen-Correlations-Spektroskopie, liegt bevorzugt im Bereich von 50 bis 1000 nm, vorzugsweise bei 200 bis 500 nm.

Bevorzugt liegt die disperse Phase der erfindungsgemäß hergestellten nicht-wäßrigen, hydroxylgruppenhaltigen Dispersion in einem Glasübergangstemperatur-Bereich von -40°C bis +60°C, berechnet aus der in der Literatur angegebenen Glasübergangstemperatur der Homopolymerisate der einzelnen Monomeren (FOX-Gleichung).

Die erfindungsgemäßen nicht-wäßrigen Dispersionen sind als Bindemittel für Überzugsmittel geeignet, wie sie beispielsweise als Basislacke oder Klarlacke für die Herstellung von Mehrschichtüberzügen, insbesondere im Kraftfahrzeugbau verwendet werden.

Derartige Überzugsmittel enthalten neben den erfindungsgemäßen Bindemitteln noch ein Vernetzungsmittel, das zur Vernetzung der Hydroxyl- bzw. Carboxylgruppen des Filmbildners geeignet ist. Es sind übliche mit Hydroxyl-und Carboxylgruppen reaktive Vernetzungsmittel geeignet. Beispielsweise kann die erfindungsgemäß hergestellte nicht-wäßrige, hydroxylgruppenhaltige Dispersion mit Aminharzen als Vernetzungsmittel kombiniert werden.

Zu geeigneten Aminharzen zählen beispielsweise alkylierte Kondensate, die durch Umsetzung von Aminotriazinen und Amidotriazinen mit Aldehyden hergestellt werden. Nach bekannten technischen Verfahren werden Amino- oder Amidogruppen tragende Verbindungen wie Melamin, Benzoguanamin, Dicyandiamid, Harnstoff, N,N'-Ethylenharnstoff in Gegenwart von Alkoholen, wie Methyl-, Ethyl-, Propyl-, iso-Butyl-, n-Butyl- und Hexylalkohol mit Aldehyden, insbesondere Formaldehyd, kondensiert. Die Reaktivität derartiger Aminharze wird bestimmt durch den Kondensationsgrad, das Verhältnis der Amin- bzw. Amid-Komponente zu Formaldehyd und durch die Art des verwendeten Veretherungsalkohols.

Das Gewichtsverhältnis der erfindungsgemäß verwendeten nicht-wäßrigen, hydroxylgruppenhaltigen Dispersion und des Aminharzes beträgt 80:20 bis 60:40.

Die erfindungsgemäßen nicht-wäßrigen Dispersionen können bei der Verarbeitung zu Überzugsmitteln mit lacküblichen Zusatz- bzw. Hilfsstoffen versetzt werden. Der Zusatz derartiger Stoffe erfolgt je nach Verwendungszweck der herzustellenden Lacke.

Als Lösemittel können die Überzugsmittel, die die erfindungsgemäß einzusetzenden nicht-wäßrigen hydroxylgruppenhaltigen Dispersionen enthalten beispielsweise die Lösemittel enthalten, die bei der Herstellung der Dispersionen eingesetzt wurden. Diese können durch weitere Lösemittel ergänzt werden. Beispiele für Lösemittel sind die gleichen, wie sie vorstehend für die Herstellung der Dispersionen beschrieben wurden.

Darüberhinaus können Überzugsmittel auf der Basis der erfindungsgemäßen Dispersionen lackübliche Hilfsstoffe enthalten, wie beispielsweise Verlaufmittel auf der Basis von z.B. (Meth)acryl-Homopolymerisaten, Celluloseestern, Silikonölen; Weichmacher auf der Basis von z.B. Phosphorsäure-, Phthalsäure- oder Zitronensäureestern, Antiabsetzmitteln, wie Montmorillonit, pyrogenes Siliziumdioxid, hydriertes Ricinusöl und Härtungsbeschleuniger für die Umsetzung der erfindungsgemäßen nicht-wäßrigen, hydroxylgruppenhaltigen Dispersion mit Aminharz, z.B. Phosphorsäure, Phosphorsäureester, Dicarbonsäure-Halbester und Zitronensäure.

Für die Herstellung von Überzugsmitteln für Basislackschichten, die die erfindungsgemäßen nicht-wäßrigen hydroxylgruppenhaltigen Dispersionen enthalten, werden Pigmente und Füllstoffe verwendet. Es können lackübliche transparente oder deckende anorganische und/oder organische Farbpigmente eingesetzt werden.

Zur Erzielung brillanter polychromatischer Metallic-Effekte werden bevorzugt Aluminiumpigmente, die aus hochreinem Aluminium (99.99%) hergestellt werden, mit transparenten anorganischen oder organischen Pigmenten eingesetzt.

Werden dekorative Effekte gewünscht, so können Perlglanzpigmente zum Einsatz kommen.

Bei der Herstellung von Mehrschichtlackierungen unter Verwendung der erfindungsgemäßen hydroxylgruppenhaltigen Bindemittel, können diese, wie vorstehend beispielsweise erwähnt, in den Basislacken enthalten sein. Derartig hergestellte Basislackschichten können mit Klarlack-Deckschichten überlackiert werden. Die hierzu verwendeten Klarlacke können beispielsweise ebenfalls die erfindungsgemäßen hydroxylgruppenhaltigen Bindemittel enthalten. Es können jedoch auch übliche transparente Lacke für die Deckschichten verwendet werden, wie beispielsweise handelsübliche lösemittelverdünnbare Einbrennklarlacke auf der Basis hydroxylgruppenhaltiger Acrylatharze, vernetzt mit handelsüblichen Melamin-Formaldehydharzen, oder Einbrennklarlacke, die organische Polymermikrogelteilchen von 0,01 bis 2 $\mu$m Teilchendurchmesser enthalten und mit Melamin-Formaldehyd-Harzen vernetzt sind; oder Einbrennklarlacke, die anorganische Mikroteilchen von 0,015 bis 60 $\mu$m Teilchendurchmesser enthalten, die in der Brechzahl dem verwendeten Bindemittel angepaßt sind; oder wasserverdünnbare Einbrennklarlacke; oder Zweikomponenten-Acrylklarlacke, die mit Isocyanaten vernetzt werden.

Herstellung des Polyesters für Beispiel 1

In ein mit Heizung, Rührer, Füllkörperkolonne, Destillationsbrücke und absteigendem Kühler, Thermometer für Reaktionsgut- und Kolonnenkopfmessung ausgestattetes Reaktionsgefäß werden 156.0 g (1.5 mol) Neopenthyglykol, 80.4 g (0.6 mol) Trimethylolpropan und 94.4 g (0.8 mol) Hexandiol-1,6 eingewogen und bei 80 °C aufgeschmolzen. Danach werden 166.0 g (1 mol) Isophthalsäure und 248.2 g (1.7 mol) Adipinsäure hinzugefügt, unter Rühren mit einer Heizrate von 20 °C/h auf 240 °C aufgeheizt und bei dieser Temperatur bis zu einer Säurezahl von 17 mg KOH/g kondensiert.

Anschließend wird auf 120 °C gekühlt und mit n-Butylacetat auf einen Festkörper von 70% verdünnt.

Das Polyesterharz hatte folgende Kennzahlen:

Festkörper = 70,8%, Viskosität = 2425 mPa.s bei 25 °C, Säurezahl = 15.0 mg KOH/g, OH-Zahl = 102 mg KOH/g,

Zahlenmittel des Molekulargewichts (Mn) = 1900.

Herstellung des Polyesters für Beispiel 2

In eine Apparatur , wie sie oben beschrieben wurde, werden 260.0 g (2.5 mol) Neopentylglykol und 80.4 g (0.6 mol) Trimethylolpropan eingewogen und bei 118 °C aufgeschmolzen. Danach werden 149.4 g (0.9 mol) Isophthalsäure, 133.2 g (0.9 mol) Phthalsäureanhydrid und 189.8 g (1.3 mol) Adipinsäure hinzugefügt, unter Rühren mit einer Heizrate von 20 °C/h auf 240 °C aufgeheizt und bei dieser Temperatur bis zu einer Säurezahl von 32 mg KOH/g kondensiert.

Anschließend wird auf 120 °C gekühlt und mit Xylol auf einen Festkörper von 65% verdünnt.

Das Polyesterharz hatte folgende Kennzahlen:

Festkörper = 65.1%, Viskosität = 1200 mPa.s bei 25 °C, Säurezahl = 28.1 mg KOH/g, OH-Zahl = 75 mg KOH/g,

Zahlenmittel des Molekulargewichts (Mn) = 1300.

Herstellung des (Meth)acryl-Copolymerisats für Beispiel 3 und Beispiel 4

In einen 2-l-Dreihalsschliffkolben, der mit einem Rührwerk, Kontaktthermometer, Kugelkühler und Tropftrichter ausgerüstet ist, werden 380 g Xylol und 20 g iso-Butanol vorgelegt und unter Rühren bei eingeschalteter Rückflußkühlung auf 127 °C geheizt.

Innerhalb von 5 Stunden wird eine Mischung aus 5 g Acrylsäure, 75 g 2-Hydroxyethylmethacrylat, 160 g n-Butylacrylat, 260 g Methylmethacrylat und 3 g tert.-Butylperbenzoat kontinuierlich aus dem Tropftrichter heraus zudosiert. Die Temperatur steigt gegen Ende der Zulaufzeit auf 129 °C an.

Nach Zulaufende wird der Tropftrichter mit 40 g Xylol nachgespült und zum Reaktionsgemisch hinzugefügt.

Anschließend wird 5 Stunden bei 127-129 °C nachpolymerisiert, so daß die Umsetzung > 99% beträgt.

Dann wird das Polymerisat auf 60 °C abgekühlt und mit 57 g Xylol verdünnt.

Das (meth)acryl-Copolymerisat hatte folgende Kennzeichen:

Festkörper = 50.3%, Viskosität = 1540 mPa.s, Säurezahl = 8.6, OH-Zahl = 65 mg KOH/g

Zahlenmittel des Molekulargewichts (Mn) = 4500.

Beispiel 1 - 4

(Herstellung von Dispersionen)

In einen 2-Liter-Dreihalsschliffkolben, der mit einem Rührwerk, Kontaktthermometer, Kugelkühler und Tropftrichter ausgerüstet ist, wird Bestandteil I (die Zusammensetzung und die Mengenangaben sind der Tabelle 1 zu entnehmen) vorgelegt und unter Rühren auf 115°C aufgeheizt.

Bestandteil II (Gemisch aus Monomeren, Lösemittel und Initiator) wird innerhalb der angegebenen Dosierzeit aus einem Tropftrichter kontinuierlich zudosiert, wobei die Temperatur von 115°C konstant gehalten wird.

Nach Ende der Zulaufzeit wird der Tropftrichter mit Bestandteil III (Lösemittel) nachgespült und das Lösemittel zum Reaktionsgemisch hinzugefügt.

Danach wird Bestandteil IV (Initiator) zugegeben und 2 Stunden lang bei 115°C nachpolymerisiert, so daß die Umsetzung > 99% beträgt.

Dann wird das Polymerisat mit Bestandteil V verdünnt und auf 60°C abgekühlt.

T A B E L L E   1:
==================

(Einwaage in Gramm)

| Bestand-teile: | Kompo-nente: | Beispiele: 1 | 2 | 3 | 4 |
|---|---|---|---|---|---|
| I | Polyester für Beispiel 1    A) | 214 | – | – | – |
| | Polyester für Beispiel 2    A) | – | 500 | – | – |
| | (Meth)acryl-Copolymerisat A) | – | – | 300 | 500 |
| | Maleinsäureanhydrid | – | 6 | – | – |
| | n-Butylacetat | – | 70 | 140 | 20 |
| | Xylol | 136 | 75 | – | – |
| II | 2-Hydroxyethylacrylat    B) | 493 | 264 | 393 | – |
| | 2-Hydroxyethylmethacrylat B) | – | – | – | 294 |
| | n-Butylacetat | 100 | 35 | 100 | 100 |
| | Tert.-Butylperoctoat | 6 | 4 | 6 | 5 |
| III | n-Butylacetat | 30 | 25 | 30 | 30 |
| IV | Tert.-Butylperoctoat | 1 | 1 | 1 | 1 |
| V | n-Butylacetat | 20 | 20 | 30 | 50 |
| $\Sigma$ | | 1000 ==== | 1000 ==== | 1000 ==== | 1000 ==== |
| Dosierzeit für Bestandteil II: | | 5 h | 2.5 h | 4 h | 3 h |
| Kennzahlen: | | | | | |
| Festkörper (%): | | 64.7% | 59.8% | 55.2% | 55.5% |
| Viskosität (mPa·s bei 25°C): | | 430 | 250 | 235 | 350 |
| Säurezahl (bez.a.Festharz): | | 9.3 | 25.2 | 7.9 | 5.8 |

7

Beispiel 5

Herstellung eines Basislacks

Die in diesem Beispiel als Teile aufgeführten Anteile sind Gewichtsteile.

37,0 Teile der Dispersionen der vorstehenden Beispiele 1 bis 4 werden mit 18,0 Teilen eines methanol- oder butanol- oder isobutanolveretherten Melamin-Formaldehydharzes, 55 - 72%ig in Butanol gelöst, als Vernetzungsmittel gemischt.

Das Vernetzungsverhältnis Feststoffanteil der Dispersion zu Melaminfestharz beträgt 70:30 Gewichtsteile.

9 Teile einer Rheologie-Paste mit einem Feststoffgehalt von 5% eines organischen Derivats eines Smektits (organisch modifiziertes Schichtsilikat) in einer Mischung aus 90 Teilen Xylol, 2,5 Teilen n-Butanol und 2,5 Teilen eines Netzmittels auf Basis eines Salzes einer höhermolekularen Polycarbonsäure dispergiert, werden mit der vorstehenden Bindemittel-Vernetzermischung 15 - 20 Minuten verrührt.

Zur erhaltenen Mischung werden 3 Teile eines Carbamidsäureharzes auf Basis von Butylurethan und Formaldehyd zugesetzt und verrührt.

Eine Paste aus 7,5 Teilen eines oberflächenbehandelten, mittelfeinen Aluminiumpulvers (62%ig in Testbenzin) wird mit 8,0 Teilen n-Butylacetat und 1,5 Teilen Butylglykolacetat unter Rühren agglomeratfrei dispergiert und mit 16,0 Teilen einer 15%igen Lösung eines Celluloseacetatbutyrats mit einem Butyrylgehalt von 38,4%, einem Acetylgehalt von 13% und einem Hydroxylgehalt von 1,4% stabilisiert. 33,0 Teile der so erhaltenen Paste werden zu 67,0 Teilen der vorstehenden Mischung unter Rühren zugefügt.

Nach dem Einstellen der so erhaltenen Metallic-Grundbeschichtung mit einer Lösemittelmischung aus 40 Teilen Butylacetat und 60 Teilen Xylol auf eine Spritzviskosität von 30 Sek. ISO resultiert ein Festkörpergehalt (1 Stunde 120°C) von 33% bzw. 31% je nach verwendetem Microgel der Beispiele 1 - 4.

| | Rezeptierungsbeispiele | | | |
|---|---|---|---|---|
| | I | II | III | IV |
| Dispersion | | | | |
| Beispiel 1 | 37,0 | - | - | - |
| Beispiel 2 | - | 37,0 | - | - |
| Beispiel 3 | - | - | 37,0 | - |
| Beispiel 4 | - | - | - | 37,0 |
| Melaminharz | 18,0 | 18,0 | 18,0 | 18,0 |
| Rheologiepaste | 9,0 | 9,0 | 9,0 | 9,0 |
| Carbamidsäureharz | 3,0 | 3,0 | 3,0 | 3,0 |
| Paste mit Al-Pulver | 33,0 | 33,0 | 33,0 | 33,0 |
| Festkörper bei 30 Sek. ISO (%) | 33,0 | 31,0 | 32,0 | 31,0 |

Beispiel 6

Herstellung eines Basislackes

Es wurde wie im Beispiel 5 gearbeitet, wobei eine Mischung der Dispersionen der Beispiele 1 - 4 mit einem OH-Gruppen-haltigen, verzweigten Polyesterharz der Herstellungsbeispiele 1 und 2 für Polyester in den Mischungsverhältnissen von 9 Gewichtsteilen Dispersion zu 1 Gewichtsteil, bezogen auf den Festkörper der Mischungspartner, verwendet wurde.

Eisenphosphatierte Stahlbleche wurden mit einer üblichen Elektrotauchlackierung grundiert, eingebrannt und mit üblichen Lackeinbrennfüllern beschichtet. Diese wurden ebenfalls eingebrannt. Auf die derart vorbereiteten Bleche wurden die vorstehenden Basislacke der Beispiele 5 und 6 mit einem Spritzdruck von 5 bar so aufgetragen, daß eine Trockenfilmschichtdicke von 10 - 15 µm resultierte. Nach einer Abluftzeit von 10 Min. wurde eine transparente Deckschicht in einer Schichtstärke von 40 µm appliziert. Nach dem Ablüften wurde 30 Min. bei 130°C eingebrannt.

Die erhaltenen Überzüge wiesen einen hervorragenden Glanz, gute mechanische Eigenschaften sowie eine hohe Witterungsbeständigkeit auf. Der Metallic-Effekt bei hohem Verarbeitungsfestkörper war ausgezeichnet.

**Patentansprüche**

1. Hydroxylgruppenhaltiges Bindemittel in Form einer nicht-wäßrigen Dispersion, enthaltend neben organischen Lösemitteln

   A) 15 - 85 Gew.-% filmbildende, in den organischen Lösemitteln gelöste hydroxyl- und carboxylgruppenhaltige Polyester oder hydroxyl- und carboxylgruppenhaltige (Meth)acryl-Copolymerisate oder deren Mischungen, wobei bis zur Hälfte der Polyester- bzw. (Meth)acryl-Copolymerisat-Moleküle jeweils mit einem Molekül Maleinsäure verestert sein kann, und

   B) 15 - 85 Gew.-% einer dispersen Phase, die aus unvernetzten (Meth)acryl-Copolymeren, mit Teilchengrößen von 50 bis 1000 nm und mit einer Hydroxylzahl, gerechnet als mg KOH pro g Komponente B), von mindestens 300, erhältlich durch radikalische Polymerisation von

   a) 80 - 100 Gew.-% Hydroxyalkyl(meth)acrylaten und

   b) 0 - 20 Gew.-% anderer $\alpha,\beta$-monoungesättigter Monomerer, die weder mit A) noch a) durch Polyaddition reagieren,

   in der filmbildenden, gelösten Komponente A), wobei die Summe der Komponenten A) und B) bzw. a) und b) jeweils 100 beträgt.

2. Hydroxylgruppenhaltiges Bindemittel nach Anspruch 1, dadurch gekennzeichnet, daß die Komponente A) ein Zahlenmittel des Molekulargewichts Mn von 1000 bis 8000 aufweist, wobei bis zu 50% der Moleküle mit jeweils einem Molekül Maleinsäure verestert sind.

3. Hydroxylgruppenhaltiges Bindemittel nach Anspruch 1, dadurch gekennzeichnet, daß die Komponente A) ein Zahlenmittel des Molekulargewichts Mn von 2000 bis 8000 aufweist, und keine Veresterung der Moleküle mit Maleinsäure vorliegt.

4. Hydroxylgruppenhaltiges Bindemittel nach Anspruch 1, 2 oder 3, dadurch gekennzeichnet, daß die Komponente B) ausschließlich aus Hydroxyalkyl(meth)acrylaten erhalten wurde.

5. Hydroxylgruppenhaltiges Bindemittel nach einem der Ansprüche 1 bis 4, dadurch gekennzeichnet, daß als Hydroxyalkyl(meth)acrylate $\beta$-Hydroxyethylacrylat oder $\beta$-Hydroxyethylmethacrylat oder deren Mischungen eingesetzt wurden.

6. Verfahren zur Herstellung einer nicht-wäßrigen Dispersion von unvernetzten hydroxylgruppenhaltigen polymeren Mikroteilchen deren Hydroxylzahl, gerechnet als mg KOH pro g mindestens 300 beträgt, **dadurch gekennzeichnet,** daß man eine Lösung von

   A)
   15-85 Gewichtsteilen filmbildende, hydroxyl- und/oder carboxylgruppenhaltige Polyester oder hydroxyl- und/oder carboxylgruppenhaltige (Meth)acryl-Copolymerisate oder deren Mischungen in organischen Lösemitteln vorlegt,wobei bis zur Hälfte der Polyester bzw.(Meth)acryl-Copolymerisat-Moleküle jeweils mit einem Molekül Maleinsäure verestert sein kann, und darin kontinuierlich

   B)
   15-85 Gewichtsteile eines Gemischs aus

   a) 80-100 Gew.-% Hydroxyalkyl(meth)acrylaten und

   b) 0-20 Gew.-% anderer $\alpha,\beta$-ungesättigter Monomerer, die weder mit A) noch mit a) durch Polyaddition reagieren,

   in Gegenwart von Radikalinitiatoren bei Temperaturen von 60 bis 130 °C umsetzt, wobei die Summe der Komponanten A) und B) bzw. a) und b) jeweils 100 beträgt.

7. Verwendung der hydroxylgruppenhaltigen Bindemittel gemäß einem der Ansprüche 1 bis 5 oder hergestellt gemäß Anspruch 6 zur Herstellung hitzehärtbarer Mehrschichtüberzüge.

8. Verwendung nach Anspruch 7 zur Erzeugung einer Basislackschicht bei der Herstellung hitzehärtbarer überzüge.

9. Verwendung nach Anspruch 7 als Klarlack.

**Claims**

1. Hydroxyl group-containing binder in the form of a non-aqueous dispersion, containing in addition to organic solvents:

   A) from 15 to 85 wt-%, dissolved in the organic solvents, of film-forming, hydroxyl group- and carboxyl group-containing polyesters or hydroxyl group- and carboxyl group-containing (meth)acrylic copolymers or mixtures thereof, wherein up to half of the molecules of polyester or (meth)acrylic copolymer may be esterified, respectively, with one molecule of maleic acid, and

   B) from 15 to 85 wt-% of a disperse phase which comprises un-crosslinked (meth)acrylic copolymers, having particle sizes of from 50 to 1000 nm and a hydroxyl number, calculated as mg KOH per g component B), of at least 300, obtainable by radical polymerisation of

   a) from 80 to 100 wt-% hydroxyalkyl (meth)acrylates and

   b) from 0 to 20 wt-% other $\alpha,\beta$-monounsaturated monomers which do not react by polyaddition with either A) or a),

   in the film-forming, dissolved component A), wherein the sum of components A) and B) and of a) and b) is in each case 100.

2. Hydroxyl group-containing binder according to Claim 1, characterised in that component A) exhibits a number average molecular weight Mn of from 1000 to 8000, wherein up to 50% of the molecules are esterified, respectively, with one molecule maleic acid.

3. Hydroxyl group-containing binder according to Claim 1, characterised in that component A) exhibits a number average molecular weight Mn of from 2000 to 8000, and there is no esterification of the molecules with maleic acid.

4. Hydroxyl group-containing binder according to Claim 1, 2 or 3, characterised in that component B) has been obtained exclusively from hydroxyalkyl (meth)acrylates.

5. Hydroxyl group-containing binder according to one of Claims 1 to 4, characterised in that $\beta$-hydroxyethyl acrylate or $\beta$-hydroxyethyl methacrylate or mixtures thereof have been utilised as hydroxyalkyl (meth)acrylates.

6. Process for the preparation of a non-aqueous dispersion of un-crosslinked hydroxyl group-containing polymeric microparticles whereof the hydroxyl number, calculated as mg KOH per g, is at least 300, characterised in that there is presented in organic solvents a solution of

   A)

   from 15 to 85 parts by weight of film-forming, hydroxyl group- and/or carboxyl group-containing polyesters or hydroxyl group- and/or carboxyl group-containing (meth)acrylic copolymers or mixtures thereof, wherein up to half of the molecules of polyester or (meth)acrylic copolymer may be esterified, respectively, with one molecule of maleic acid, and

   B) from 15 to 85 parts by weight of a mixture comprising

   a) from 80 to 100 wt-% hydroxyalkyl (meth)acrylates and

   b) from 0 to 20 wt-% other $\alpha,\beta$-monounsaturated monomers which do not react by polyaddition with either A) or a),

   is reacted therein continuously in the presence of radical initiators at temperatures of from 60 to 130°C,

   wherein the sum of components A) and B) and of a) and b) is in each case 100.

7. Use of the hydroxyl group-containing binders according to one of Claims 1 to 5 or prepared according to Claim 6 for the preparation of heat-curable multi-film coatings.

8. Use according to Claim 7 to produce a base lacquer film when preparing heat-curable coatings.

9. Use according to Claim 7 as clear lacquer.

**Revendications**

1. Liant contenant des groupes hydroxyles sous la forme d'une dispersion non-aqueuse, contenant à côté des solvants organiques

   A) 15 à 85% en poids de polyesters contenant des groupes hydroxyles et carboxyles ou de copolymérisats (méth)acryliques contenant des groupes hydroxyles et carboxyles ou leurs mélanges, filmogènes, dissous dans les solvants organiques, jusqu'à la moitié des molécules de polyesters ou des copolymérisats (méth)acryliques pouvant être estérifiée avec une molécule d'acide maléique et

   B) 15 à 85% en poids d'une phase dispersée constituée de copolymères (méthy)acryliques non réticulés, ayant une taille de particules allant de 50 à 1 000 nm et un indice hydroxyle, calculé sous forme de mg KOH par g de composant B), d'au moins 300, obtenus par polymérisation radicalaire de

   a) 80 à 100% en poids de (méthy)acrylates d'hydroxyalkyles et

   b) 0 à 20% en poids d'autres monomères $\alpha$, $\beta$-monoinsaturés, ne réagissant ni avec A), ni avec a) par polyaddition,

   dans le composant A) filmogène, dissous, la somme des constituants A) et B) ou a) et b) étant égale à 100.

2. Liant contenant des groupes hydroxyles selon la revendication 1, caractérisé en ce que le composant A) présente une masse moléculaire moyenne en nombre Mn allant de 1 000 à 8 000, jusqu'à 50% des molécules étant estérifiées avec une molécule d'acide maléique.

3. Liant contenant des groupes hydroxyles selon la revendication 1, caractérisé en ce que le composant A) présente une masse moléculaire moyenne en nombre Mn allant de 2 000 à 8 000 et que la molécule n'est pas estérifiée avec l'acide maléique.

4. Liant contenant des groupes hydroxyles selon les revendications 1, 2 ou 3, caractérisé en ce que le composant B) est obtenu exclusivement à partir de (méth)acrylates d'hydroxyalkyle.

5. Liant contenant des groupes hydroxyles selon l'une des revendications 1 à 4, caractérisé en ce que l'on utilise, comme (méth)acrylates d'hydroxyalkyle, l'acrylate de $\beta$-hydroxyéthyle ou le méthacrylate de $\beta$-hydroxyéthyle ou leurs mélanges.

6. Procédé pour la préparation d'une dispersion non-aqueuse de microparticules polymériques contenant des groupes hydroxyles non-réticulés, ayant un indice hydroxyle, calculé sous forme de mg KOH par g, d'au moins 30, caractérisé en ce que l'on introduit une solution de

   A) 15 à 85 parties en poids de polyesters contenant des groupes hydroxyles et/ou carboxyles filmogènes et/ou de copolymérisats (méthy)acryliques contenant des groupes hydroxyles et/ou carboxyles ou de leurs mélanges dans des solvants organiques, jusqu'à la moitié des molécules de polyesters ou de copolymérisats (méth)acryliques pouvant être estérifiée par une molécule d'acide maléique et en ce que l'on fait réagir, de façon continue, dans cette solution

   B) 15 à 85 parties en poids d'un mélange constitué de

   a) 80 à 100% en poids de (méthy)acrylates d'hydroxyalkyles et

   b) 0 à 20% en poids d'autres monomères $\alpha$, $\beta$-insaturés, ne réagissant ni avec A) ni avec a) par polyaddition,

   en présence d'initiateurs radicalaires à des températures allant de 60 à 130°C,

   la somme des composants A) et B) ou a) et b) étant égale à 100.

7. Utilisation des liants contenant des groupes hydroxyles selon l'une des revendications 1 à 5 ou préparés selon la revendication 6 pour la réalisation de revêtements à couches multiples, durcissables à la chaleur.

8. Utilisation selon la revendication 7 pour la production d'une couche de vernis de base lors de la réalisation de revêtements durcissables à chaud.

9. Utilisation selon la revendication 7 pour la réalisation d'une couche transparente.